(19) Europäisches Patentamt
European Patent Office
Office européen des brevets

(11) **EP 2 834 504 B2**

(12) **NEW EUROPEAN PATENT SPECIFICATION**
After opposition procedure

(45) Date of publication and mention
of the opposition decision:
**16.11.2022   Bulletin 2022/46**

(45) Mention of the grant of the patent:
**03.07.2019   Bulletin 2019/27**

(21) Application number: **13816584.0**

(22) Date of filing: **27.03.2013**

(51) International Patent Classification (IPC):
**F02C 7/36** (2006.01)      **F02K 3/06** (2006.01)

(52) Cooperative Patent Classification (CPC):
**F02K 3/06; F02C 7/36;** F05D 2260/40311

(86) International application number:
**PCT/US2013/033962**

(87) International publication number:
**WO 2014/011252 (16.01.2014 Gazette 2014/03)**

(54) **GEARED ARCHITECTURE WITH SPEED CHANGE DEVICE FOR GAS TURBINE ENGINE**

GETRIEBE ARCHITEKTUR MIT DREHZAHLÄNDERUNGSVORRICHTUNG FÜR GASTURBINENMOTOR

ARCHITECTURE À ENGRENAGE AYANT UN DISPOSITIF DE CHANGEMENT DE VITESSE POUR MOTEUR À TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **02.04.2012   US 201213437448**

(43) Date of publication of application:
**11.02.2015   Bulletin 2015/07**

(60) Divisional application:
**19183993.5 / 3 569 846**

(73) Proprietor: **Raytheon Technologies Corporation Farmington, CT 06032 (US)**

(72) Inventors:
• **KUPRATIS, Daniel Bernard**
  **Wallingford, Connecticut 06492 (US)**
• **SCHWARZ, Fredrick M.**
  **Glastonbury, Connecticut 06033 (US)**

(74) Representative: **Dehns**
**St. Bride's House**
**10 Salisbury Square**
**London EC4Y 8JD (GB)**

(56) References cited:
| US-A- 5 010 729 | US-A- 5 010 729 |
| US-A- 6 033 450 | US-A1- 2003 114 267 |
| US-A1- 2007 084 184 | US-A1- 2008 098 716 |
| US-A1- 2008 098 718 | US-A1- 2008 120 839 |
| US-A1- 2009 074 565 | US-A1- 2009 074 565 |
| US-A1- 2009 151 317 | US-A1- 2011 206 498 |

EP 2 834 504 B2

**Description**

**BACKGROUND**

This disclosure relates to a geared architecture for a gas turbine engine.

One type of geared turbofan engine includes a two-spool arrangement in which a low spool, which supports a low pressure turbine section, is coupled to a fan via a planetary gear train. A high pressure spool supports a high pressure turbine section. Low and high pressure compressor sections are respectively supported by the low and high spools.

The planetary gear train includes a planetary gear set surrounding and intermeshing with a centrally located sun gear that is connected to the low spool. A ring gear circumscribes and intermeshes with the planetary gears. A fan shaft supports the fan. The fan shaft is connected to either the planetary gears or the ring gear, and the other of the planetary gears and ring gear is grounded to the engine static structure. This type of planetary gear arrangement can limit the design speeds of and configuration of stages in the low and high pressure turbine sections.

US 2008/120839 discloses a gas turbine engine according to the preamble of claim 1. Further gas turbine engines are disclosed in US 2009/074565, US 2007/084184 and US 2008/098716.

**SUMMARY**

In accordance with the present invention, there is provided a gas turbine engine as set forth in claim 1.

In an embodiment, the first gear train is arranged between the first shaft and the second gear train.

In a further embodiment, the second gear train is arranged between the first shaft and the first gear train.

In a further embodiment of any of the above, the planetary gears are supported by a carrier. The carrier is configured to receive rotational input from one of the first shaft and the second gear train.

In a further embodiment of any of the above, the second gear train is configured to receive rotational input from the sun gear.

In a further embodiment of any of the above, the gas turbine engine includes an inducer that is coupled to the second gear train.

In a further embodiment of any of the above, first and second shafts respectively provide low and high spools. The first compressor and turbine sections are low pressure compressor and turbine sections. The second compressor and turbine sections are high pressure compressor and turbine sections.

**BRIEF DESCRIPTION OF THE DRAWINGS**

The disclosure can be further understood by reference to the following detailed description when considered in connection with the accompanying drawings wherein:

Figure 1 schematically illustrates a gas turbine engine.
Figure 2 is a schematic view of a geared architecture for the engine shown in Figure 1.
Figure 3 is a schematic view of geared architecture according to the invention.
Figure 4 is a schematic view of a geared architecture embodiment with an inducer.
Figure 5 is a schematic view of yet another geared architecture embodiment.
Figure 6 is a schematic view of another geared architecture embodiment with an inducer.
Figure 7 is a schematic view of yet another geared architecture embodiment with an inducer.
Figure 8 is a schematic view of still another geared architecture embodiment with an inducer.
Figure 9A is a schematic view of an epicyclic gear train having a first example geometry ratio.
Figure 9B is a schematic view of an epicyclic gear train having a second example geometry ratio.
Figure 9C is a schematic view of an epicyclic gear train having a third example geometry ratio.
Figure 10 is a nomograph depicting the interrelationship of speeds of epicyclic gear train components for a given geometry ratio.
Figure 11A is a schematic view of an epicyclic gear train having the first geometry ratio with a carrier rotating in the opposite direction to that shown in Figure 9A.
Figure 11B is a schematic view of an epicyclic gear train having the second geometry ratio with a carrier rotating in the opposite direction to that shown in Figure 9B.
Figure 11C is a schematic view of an epicyclic gear train having the third geometry ratio with a carrier rotating in the opposite direction to that shown in Figure 9C.

**DETAILED DESCRIPTION**

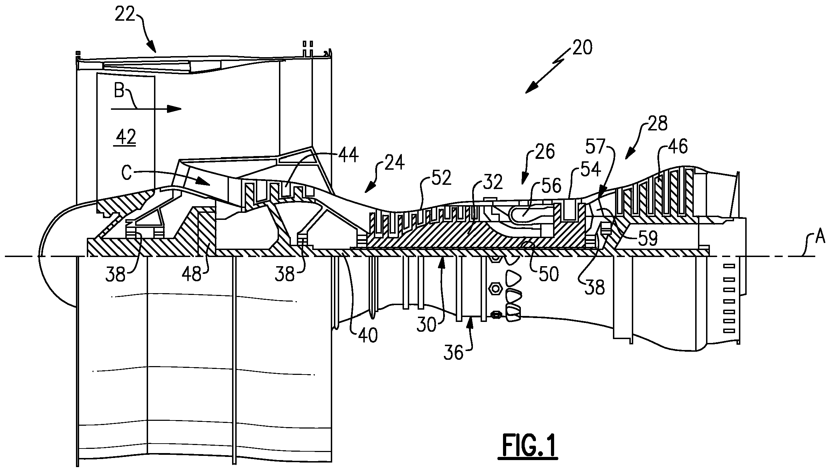

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure (or first) compressor section 44 and a low pressure (or first) turbine section 46. The inner shaft 40 is connected to the fan 42 through a geared architecture 48 to drive the fan 42 at a lower speed than the low speed spool 30. The high speed spool 32 includes an outer shaft 50 that interconnects a high pressure (or second) compressor section 52 and high pressure (or second) turbine section 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 supports one or more bearing systems 38 in the turbine section 28. The inner shaft 40 and the outer shaft 50 are concentric and rotate via bearing systems 38 about the engine central longitudinal axis A, which is collinear with their longitudinal axes. As used herein, a "high pressure" compressor or turbine experiences a higher pressure than a corresponding "low pressure" compressor or turbine.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a star gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10, 668 m). The flight condition of 0.8 Mach and 35,000 ft (10, 668 m), with the engine at its best fuel consumption - also known as "bucket cruise Thrust Specific Fuel Consumption ('TSFC')" - is the industry standard parameter of lbm of fuel being burned per hour divided by lbf of thrust the engine produces at that minimum point. "Fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of $[(\text{Tram deg R}) / 518.7]^{0.5}$. The "Low corrected fan tip speed" as disclosed herein according to one non-limiting embodiment is less than about 1150 ft / second (351 m/s).

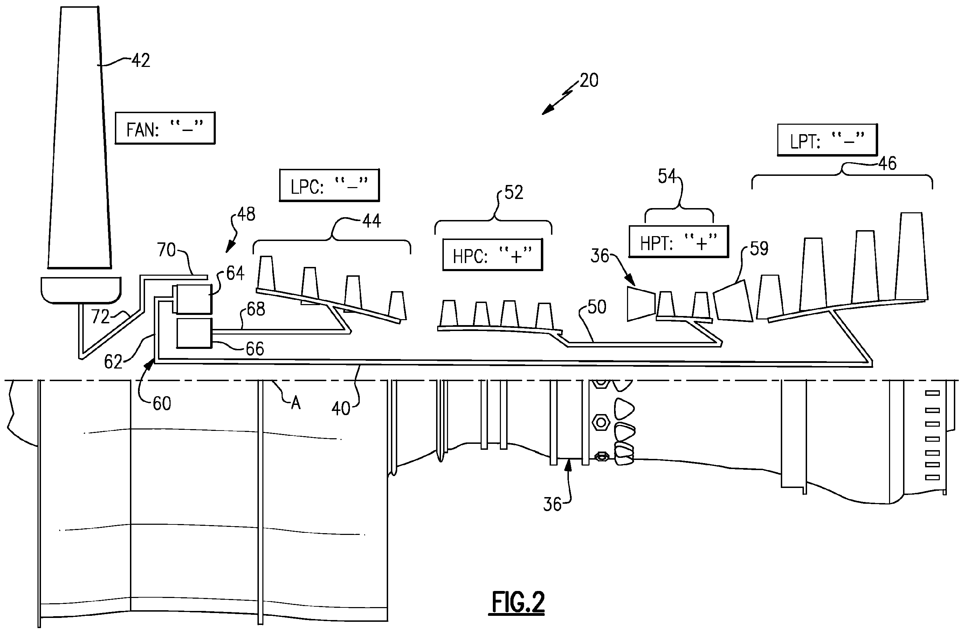

An example geared architecture 48 for the engine 20 is shown in Figure 2. Generally, the engine static structure 36 supports the inner and outer shafts 40, 50 for rotation about the axis A. The outer shaft 50 supports the high pressure compressor section 52 and the high pressure turbine section 54, which is arranged upstream from the mid turbine frame 59.

The inner shaft 40 is coupled to the geared architecture 48, which is an epicyclic gear train 60 configured in a differential arrangement. The gear train 60 includes planetary gears 64 supported by a carrier 62, which is connected to the inner shaft 40 that supports the low pressure turbine 46. A sun gear 66 is centrally arranged relative to and intermeshes with the planetary gears 64. A ring gear 70 circumscribes and intermeshes with the planetary gears 64. In the example, a fan shaft 72, which is connected to the fan 42, is rotationally fixed relative to the ring gear 70. The low pressure compressor 44 is supported by a low pressure compressor rotor 68, which is connected to the sun gear 66 in the example.

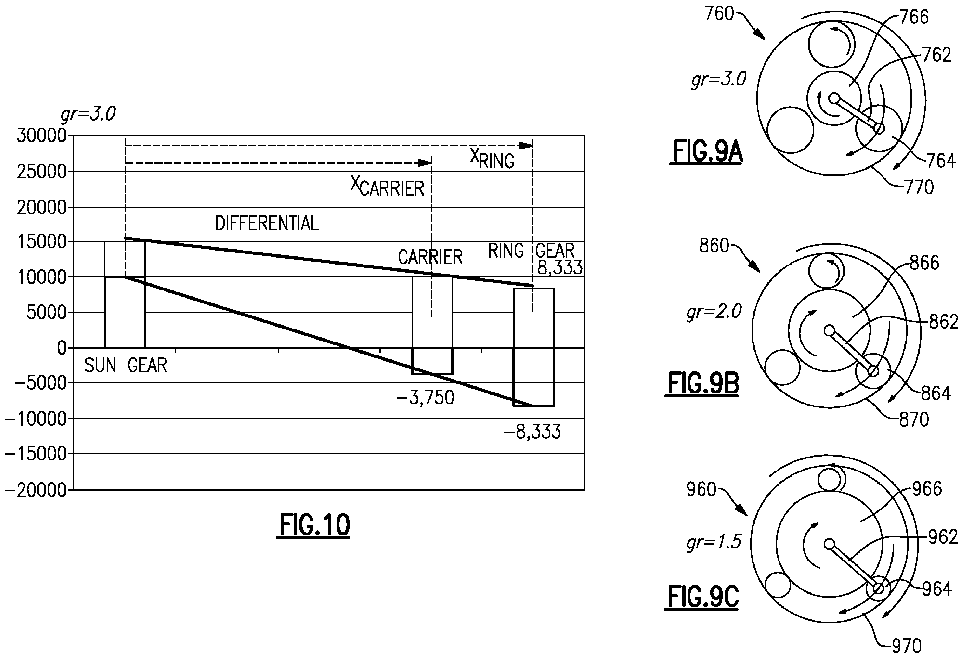

The carrier 62 is rotationally driven by the low pressure turbine 46 through the inner shaft 40. The planetary gears 64 provide the differential input to the fan shaft 72 and
low pressure compressor rotor 68 based upon the geometry ratio, which is discussed in detail in connection with Figures 9A-10.

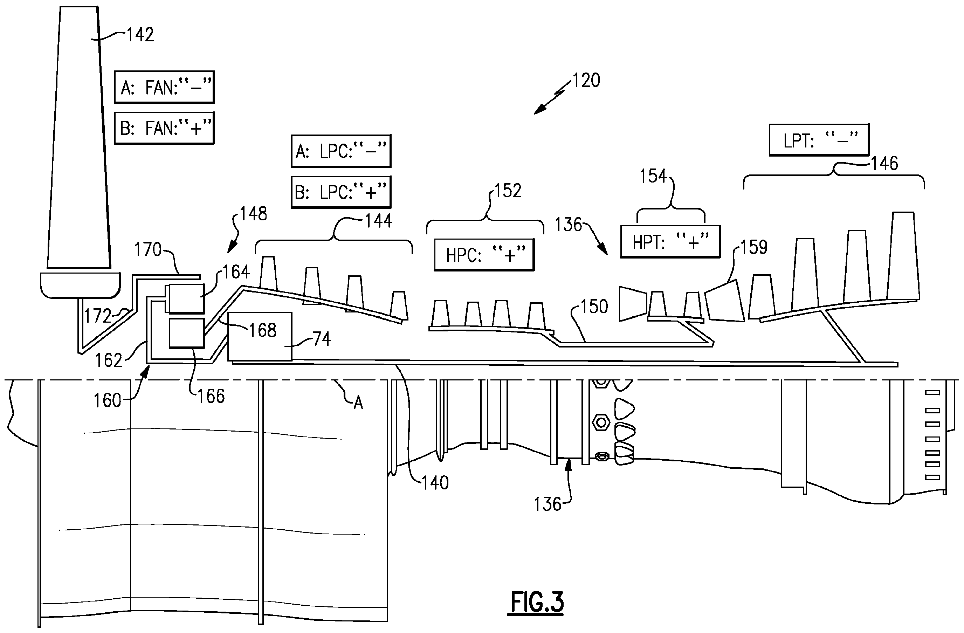

Another example geared architecture 148 for the engine 120 is shown in Figure 3. The engine static structure 136 supports the inner and outer shafts 140, 150 for rotation about the axis A. The outer shaft 150 supports the high pressure compressor section 152 and the high pressure turbine section 154, which is arranged upstream from the mid turbine frame 159.

The inner shaft 140 is coupled to the geared architecture 148, which is an epicyclic gear train 160 configured in a differential arrangement. The gear train 160 includes planetary gears 164 supported by a carrier 162, which is connected to the inner shaft 140 that supports the low pressure turbine 146. A sun gear 166 is centrally arranged relative to and intermeshes with the planetary gears 164. A ring gear 170 circumscribes and intermeshes with the planetary gears 164. In the example, a fan shaft 172, which is connected to the fan 142, is rotationally fixed relative to the ring gear 170. The low pressure compressor 144 is supported by a low pressure compressor rotor 168, which is connected to the sun gear 166 in the example.

The carrier 162 is rotationally driven by the low pressure turbine 146 through the inner shaft 140. The planetary gears 164 provide the differential input to the fan shaft 172 and low pressure compressor rotor 168 based upon the geometry ratio. The geared architecture 148 includes an additional speed change device 74 interconnecting the inner shaft 140 and the gear train 160. Higher low pressure turbine section rotational speeds are attainable with the additional speed change device 74, enabling the use of fewer turbine stages in the low pressure turbine section. The speed change device 74 may be a geared arrangement and/or a hydraulic arrangement for reducing the rotational speed from the low pressure turbine section 146 to the fan 142 and low pressure compressor section 144.

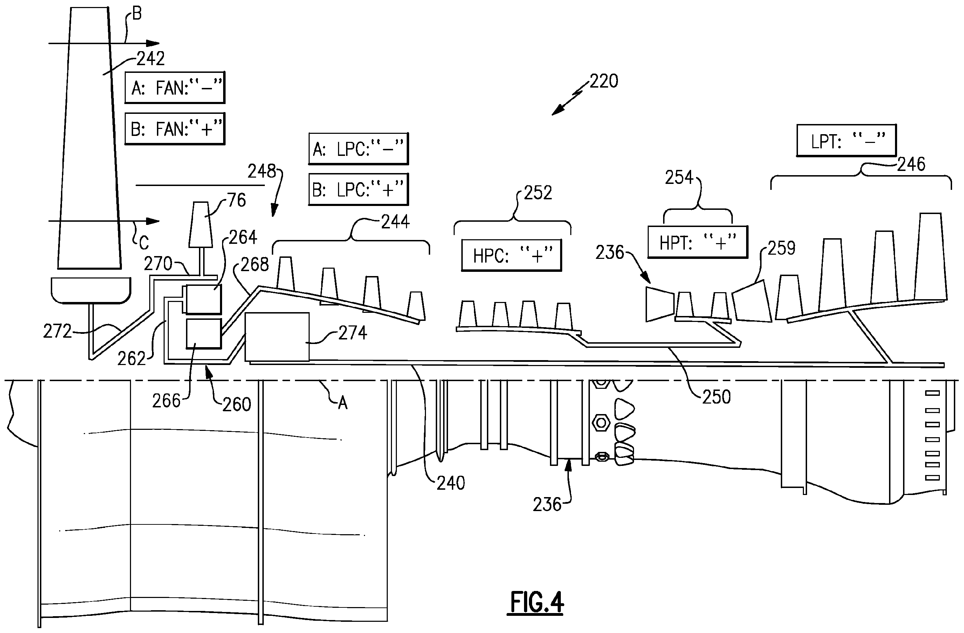

Another example geared architecture 248 for the engine 220 is shown in Figure 4. The engine static structure 236 supports the inner and outer shafts 240, 250 for rotation about the axis A. The outer shaft 250 supports the high pressure compressor section 252 and the high pressure turbine section 254, which is arranged upstream from the mid turbine frame 259.

The inner shaft 240 is coupled to the geared architecture 248, which is an epicyclic gear train 260 configured in a differential arrangement. The gear train 260 includes planetary gears 264 supported by a carrier 262, which is connected to the inner shaft 240 that supports the low pressure turbine 246. A sun gear 266 is centrally arranged relative to and intermeshes with the planetary gears 264. A ring gear 270 circumscribes and intermeshes with the planetary gears 264. In the example, a fan shaft 272, which is connected to the fan 242, is rotationally fixed relative to the ring gear 270. The low pressure compressor 244 is supported by a low pressure compressor rotor 268, which is connected to the sun gear 266 in the example.

The carrier 262 is rotationally driven by the low pressure turbine 246 through the inner shaft 240. The planetary gears 264 provide the differential input to the fan shaft 272 and low pressure compressor rotor 268 based upon the geometry ratio. The geared architecture 248 includes an additional speed change device 274 interconnecting the inner shaft 240 and the gear train 260.

An inducer 76 is fixed for rotation relative to the ring gear 270. The inducer 76 is arranged in the core flow path C to provide some initial compression to the air before entering the low pressure compressor section 244. The inducer 76 rotates at the same rotational speed as the fan 242 and provides some additional thrust, which is useful in hot weather, for example, where engine thrust is reduced.

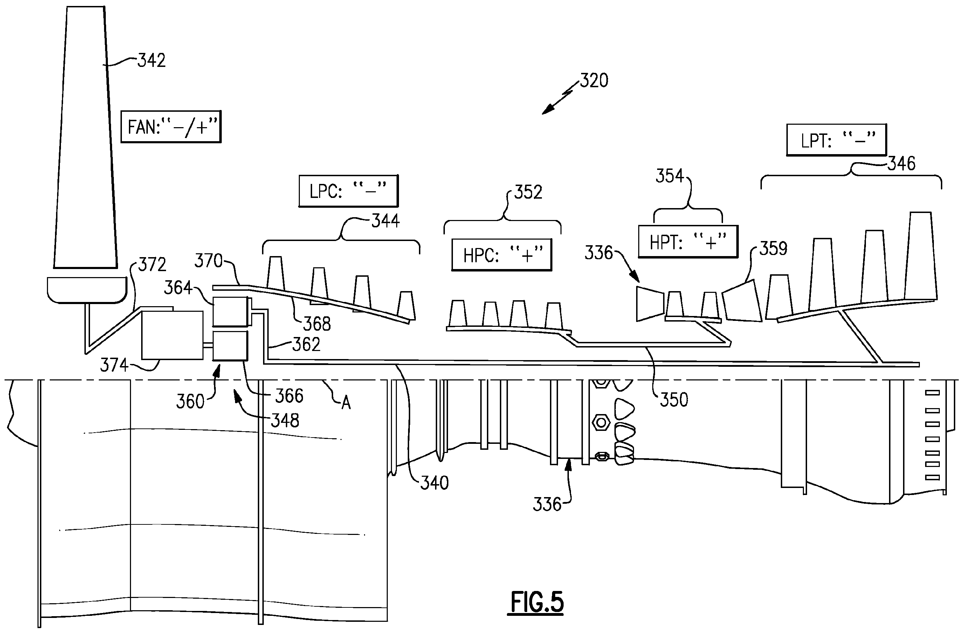

Another example geared architecture 348 for the engine 320 is shown in Figure 5. The engine static structure 336 supports the inner and outer shafts 340, 350 for rotation about the axis A. The outer shaft 350 supports the high pressure compressor section 352 and the high pressure turbine section 354, which is arranged upstream from the mid turbine frame 359.

The inner shaft 340 is coupled to the geared architecture 348, which is an epicyclic gear train 360 configured in a differential arrangement. The gear train 360 includes planetary gears 364 supported by a carrier 362, which is connected to the inner shaft 340 that supports the low pressure turbine 346. A sun gear 366 is centrally arranged relative to and intermeshes with the planetary gears 364. A ring gear 370 circumscribes and intermeshes with the planetary gears 364. In the example, a fan shaft 372 is connected to the fan 342. The low pressure compressor 344 is supported by a low pressure compressor rotor 368, which is rotationally fixed relative to the ring gear 370 in the example.

The carrier 362 is rotationally driven by the low pressure turbine 346 through the inner shaft 340. The planetary gears 364 provide the differential input to the fan shaft 372 and low pressure compressor rotor 368 based upon the geometry ratio. The geared architecture 348 includes an additional speed change device 374 interconnecting the inner shaft 340 and the gear train 360. The speed change device 374 receives rotational input from the sun gear 366 and couples the fan shaft 372 to the gear train 360, which enables slower fan speeds.

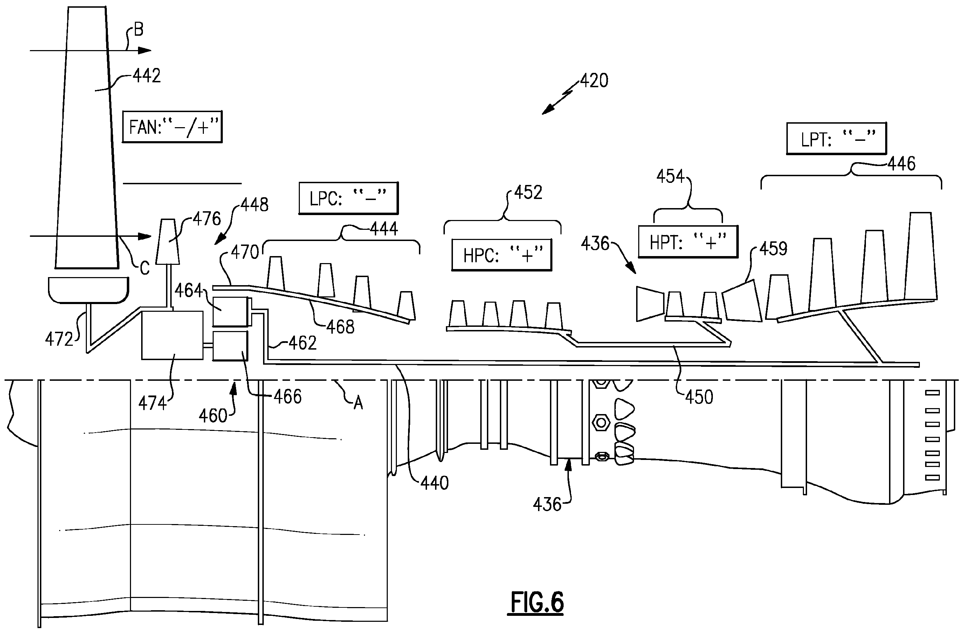

Another example geared architecture 448 for the engine 420 is shown in Figure 6. The engine static structure 436 supports the inner and outer shafts 440, 450 for rotation about the axis A. The outer shaft 450 supports the high pressure compressor section 452 and the high pressure turbine section 454, which is arranged upstream from the mid turbine frame 459.

The inner shaft 440 is coupled to the geared architecture 448, which is an epicyclic gear train 460 configured in a differential arrangement. The gear train 460 includes planetary gears 464 supported by a carrier 462, which is connected to the inner shaft 440 that supports the low pressure turbine 446. A sun gear 466 is centrally arranged relative to and intermeshes with the planetary gears 464. A ring gear 470 circumscribes and intermeshes with the planetary gears 464. In the example, a fan shaft 472 is connected to the fan 442. The low pressure compressor 444 is supported by a low pressure compressor rotor 468, which is rotationally fixed relative to the ring gear 470 in the example.

The carrier 462 is rotationally driven by the low pressure compressor 446 through the inner shaft 440. The planetary gears 464 provide the differential input to the fan shaft 472 and low pressure compressor rotor 468 based upon the geometry ratio. The geared architecture 448 includes an additional speed change device 474 interconnecting the inner shaft 440 and the gear train 460. The speed change device 474 receives rotational input from the sun gear 466 and couples the fan shaft 472 to the gear train 460, which enables slower fan speeds.

The inducer 476 is fixed for rotation relative to the fan shaft 472. The inducer 476 is arranged in the core flow path C to provide some initial compression to the air before entering the low pressure compressor section 444. The inducer 476 rotates at the same rotational speed as the fan 442.

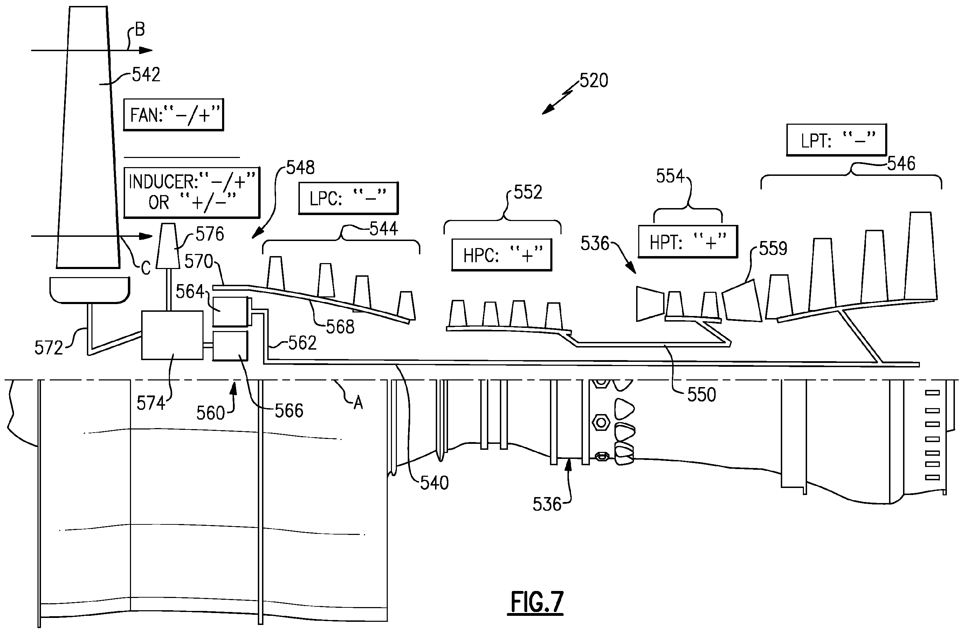

Another example geared architecture 548 for the engine 520 is shown in Figure 7. The engine static structure 536 supports the inner and outer shafts 540, 550 for rotation about the axis A. The outer shaft 550 supports the high pressure compressor section 552 and the high pressure turbine section 554, which is arranged upstream from the mid turbine frame 559.

The inner shaft 540 is coupled to the geared architecture 548, which is an epicyclic gear train 560 configured in a differential arrangement. The gear train 560 includes planetary gears 564 supported by a carrier 562, which is connected to the inner shaft 540 that supports the low pressure turbine 546. A sun gear 566 is centrally arranged relative to and intermeshes with the planetary gears 564. A ring gear 570 circumscribes and intermeshes with the planetary gears 564. In the example, a fan shaft 572 is connected to the fan 542. The low pressure compressor 544 is supported by a low pressure compressor rotor 568, which is rotationally fixed relative to the ring gear 570 in the example.

The carrier 562 is rotationally driven by the low pressure turbine 546 through the inner shaft 540. The planetary gears 564 provide the differential input to the fan shaft 572 and low pressure compressor rotor 568 based upon the geometry ratio. The geared architecture 548 includes an additional speed change device 574 interconnecting the inner shaft 540 and the gear train 560. The speed change device 574 receives rotational input from the sun gear 566 and couples the fan shaft 572 to the gear train 560, which enables slower fan speeds.

The inducer 576 is fixed for rotation relative to the fan shaft 572. The inducer 576 is arranged in the core flow path C to provide some initial compression to the air before entering the low pressure compressor section 544. In one example, the sun gear 566 rotates at the same speed as one of the fan shaft 572 and the inducer 576, and the other of the fan shaft 572 and the inducer 576 rotate at a different speed than the sun gear 566. In another example, the inducer 576, sun gear 566 and fan shaft 572 rotate at different rotational speeds than one another through the speed change device 574, which is another epicyclic gear train, for example.

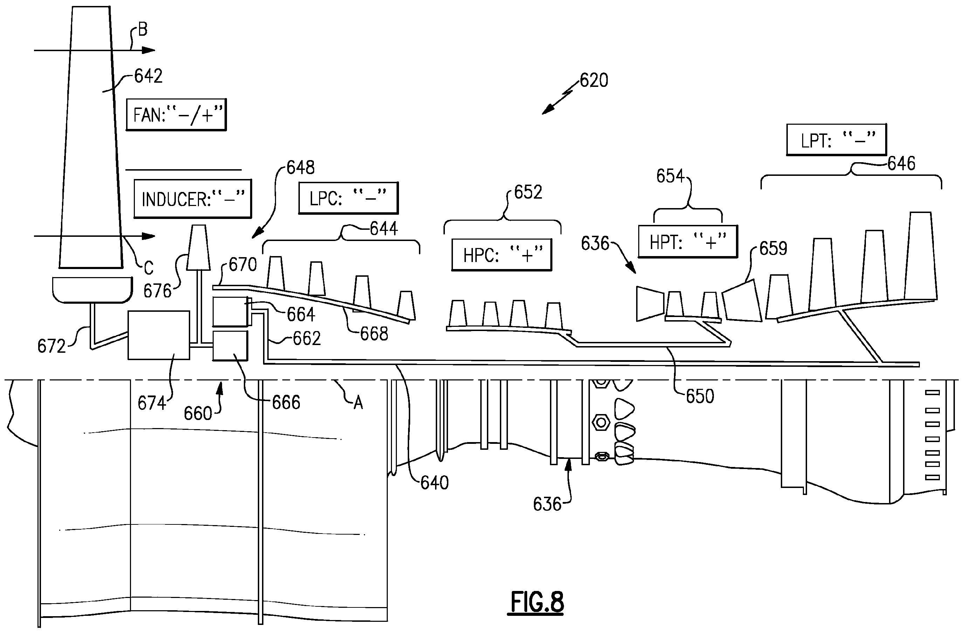

Another example geared architecture 648 for the engine 620 is shown in Figure 8. The engine static structure 636 supports the inner and outer shafts 640, 650 for rotation about the axis A. The outer shaft 650 supports the high pressure compressor section 652 and the high pressure turbine section 654, which is arranged upstream from the mid turbine frame 659.

The inner shaft 640 is coupled to the geared architecture 648, which is an epicyclic gear train 660 configured in a differential arrangement. The gear train 660 includes planetary gears 664 supported by a carrier 662, which is connected to the inner shaft 640 that supports the low pressure turbine 646. A sun gear 666 is centrally arranged relative to and intermeshes with the planetary gears 664. A ring gear 670 circumscribes and intermeshes with the planetary gears 664. In the example, a fan shaft 672 is connected to the fan 642. The low pressure compressor 644 is supported by a low pressure compressor rotor 668, which is rotationally fixed relative to the ring gear 670 in the example.

The carrier 662 is rotationally driven by the low pressure turbine 646 through the inner shaft 640. The planetary gears 664 provide the differential input to the fan shaft 672 and low pressure compressor rotor 668 based upon the geometry ratio. The geared architecture 648 includes an additional speed change device 674 interconnecting the inner shaft 640 and the gear train 660. The speed change device 674 receives rotational input from the sun gear 666 and couples the fan shaft 672 to the gear train 660, which enables slower fan speeds.

The inducer 676 is arranged in the core flow path C to provide some initial compression to the air before entering the low pressure compressor section 644. The inducer 676 is fixed to the sun gear 666 for rotation at the same rotational speed.

In the arrangements shown in Figures 2-8, the relative rotational directions are shown for each of the fan, low pressure compressor section, high pressure compressor section, high pressure turbine section, low pressure turbine section and inducer. The geared architectures may be configured in a manner to provide the desired rotational direction for a given engine design.

The example geared architectures enable large fan diameters relative to turbine diameters, moderate low pressure turbine to fan speed ratios, moderate low pressure compressor to low pressure turbine speed ratios, high low pressure compressor to fan speed ratios and compact turbine section volumes. The low pressure turbine section may include between three and six stages, for example.

The rotational speeds of the sun gear, ring gear and carrier are determined by the geometry ratio of the differential gear train. The interrelationship of these components can be expressed using the following equation:

$$\frac{X_{carrier}}{X_{ring}} = \frac{GR}{1+GR} \text{ , where} \qquad \text{(Equation 1)}$$

$X_{carrier}$ is the nomograph distance of the planetary rotational axis from the sun gear axis,
$X_{ring}$ is the nomograph radius of the ring gear, and
$GR$ is the geometry ratio.

Thus, for a geometry ratio of 3.0, $\frac{X_{carrier}}{X_{ring}} = 0.75$.

The relative sizes amongst the sun gear, planetary gears and ring gear for several different geometry ratios are schematically depicted in Figures 9A-9C. Referring to Figure 9A, the epicyclic gear train 760 includes a sun gear 766, planetary 764, carrier 762 and ring gear 770 that are sized to provide a geometry ratio of 3.0. Referring to Figure 9B, the epicyclic gear train 860 includes a sun gear 866, planetary 864, carrier 862 and ring gear 870 that are sized to provide a geometry ratio of 2.0. Referring to Figure 9C, the epicyclic gear train 960 includes a sun gear 966, planetary 964, carrier 962 and ring gear 970 that are sized to provide a geometry ratio of 1.5. In the examples, the ring gear radius remains constant.

Figure 10 graphically depicts effects of the geometry ratio on the rotational speeds and directions of the sun and ring gears and the carrier. The upper, lighter shaded bars relate to Figure 9A-9C. Assuming a rotational input from the low pressure turbine to the carrier of 10,000 RPM, the sun gear would be driven at 15,000 RPM and the ring gear would be driven at 8,333 RPM for a geometry ratio of 3.0. In an arrangement in which the fan is coupled to the ring gear and the sun gear is coupled to the low pressure compressor, like the arrangement shown in Figure 2, the following speed ratios would be provided: LPT:fan = 1.2, LPC:LPT = 1.5, and LPC:fan = 1.8.

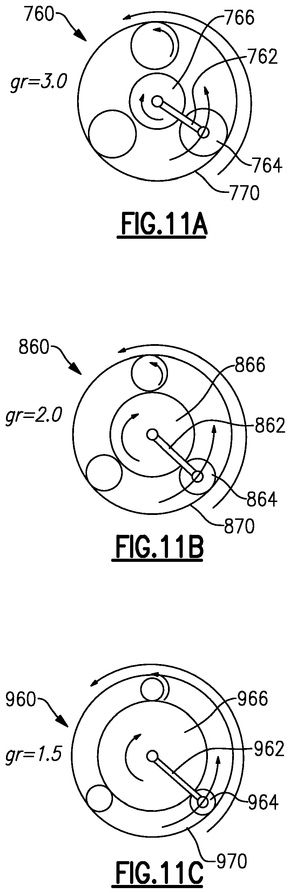

The lower, darker shaded bars relate to Figures 11A-11C. The carrier and ring gear rotate in the opposite direction than depicted in Figure 9A-9C.

## Claims

1. A gas turbine engine (120) comprising:

   first and second shafts (140, 150) rotatable about a common axis (A);
   a fan (142); and
   first and second gear trains (160, 74) interconnected to one another, the first and second gear trains (160, 74) together coupling the first shaft (140) to the fan (142),
   wherein the first gear train (160) is an epicyclic gear train,
   wherein the second gear train (74) is configured to provide a speed reduction and **characterised in that** the epicyclic gear train (160) is a differential gear train that includes a sun gear (166), planetary gears (164) arranged about and intermeshing with the sun gear (166), and a ring gear (170) circumscribing and intermeshing with the planetary gears (164),
   wherein the gas turbine engine (120) comprises a first turbine section (146) supported on the first shaft (140), second compressor (152) and turbine sections (154) supported on the second shaft (150), and a first compressor section (144) coupled to the first gear train (160).

2. The gas turbine engine according to claims 1, wherein the first gear train (160) is arranged between the first shaft (140) and the second gear train (74).

3. The gas turbine engine according to claim 2, wherein the planetary gears (164) are supported by a carrier (162), the carrier (162) is configured to receive rotational input from the first shaft (140).

4. The gas turbine engine according to claim 3, wherein the second gear train (74) is configured to receive rotational input from the sun gear (166).

5. The gas turbine engine according to any preceding claim, comprising an inducer (76) coupled to the second gear train (74).

6. The gas turbine engine according to any preceding claim, wherein the first and second shafts (140, 150) respectively provide low and high spools, and the first compressor (144) and turbine sections (146) are low pressure compressor and turbine sections, and the second compressor (152) and turbine sections (154) are high pressure compressor and turbine sections.

7. The gas turbine engine according to claim 1, wherein the second gear train (74) is arranged between the first shaft (140) and the first gear train (160).

8. The gas turbine engine according to claim 7, wherein the planetary gears (164) are supported by a carrier (162), the carrier (162) is configured to receive rotational input from the second gear train (74).

**Patentansprüche**

1. Gasturbinentriebwerk (120), umfassend:

eine erste und ein zweite Welle (140, 150), die um eine gemeinsame Achse (A) drehbar sind,
ein Gebläse (142); und
einen ersten und einen zweiten Getriebezug (160, 74), die miteinander verbunden sind, wobei der erste und der zweite Getriebezug (160, 74) gemeinsam die erste Welle (140) mit dem Gebläse (142) koppeln,
wobei der erste Getriebezug (160) ein Planetengetriebezug ist,
wobei der zweite Getriebezug (74) konfiguriert ist, um eine Drehzahlverminderung bereitzustellen, und **dadurch gekennzeichnet, dass** der Planetengetriebezug (160) ein Differentialgetriebezug ist, der ein Sonnenrad (166), Planetenräder (164), die um das Sonnenrad (166) angeordnet sind und damit verzahnt sind, und ein Hohlrad (170), das die Planetenräder (164) umgibt und mit diesen verzahnt ist, umfasst,
wobei das Gasturbinentriebwerk (120) einen ersten Turbinenabschnitt (146), der auf der ersten Welle (140) gelagert ist, einen zweiten Verdichter- (152) und einen zweiten Turbinenabschnitt (154), die auf der zweiten Welle (150) gelagert sind, und einen ersten Verdichterabschnitt (144), der mit dem ersten Getriebezug (160) gekoppelt ist, umfasst.

2. Gasturbinentriebwerk nach Anspruch 1, wobei der erste Getriebezug (160) zwischen der ersten Welle (140) und dem zweiten Getriebezug (74) angeordnet ist.

3. Gasturbinentriebwerk nach Anspruch 2, wobei die Planetenräder (164) von einem Träger (162) gelagert werden, wobei der Träger (162) konfiguriert ist, um Drehantriebsleistung von der ersten Welle (140) aufzunehmen.

4. Gasturbinentriebwerk nach Anspruch 3, wobei der zweite Getriebezug (74) konfiguriert ist, um Drehantriebsleistung von dem Sonnenrad (166) aufzunehmen.

5. Gasturbinentriebwerk nach einem der vorstehenden Ansprüche, umfassend einen Vorsatzläufer (76), der mit dem zweiten Getriebezug (74) gekoppelt ist.

6. Gasturbinentriebwerk nach einem der vorstehenden Ansprüche, wobei die erste und die zweite Welle (140, 150) Niederbeziehungsweise Hochdruckwellen bereitstellen, und der erste Verdichter- (144) und der erste Turbinenabschnitt (146) ein Niederdruckverdichter- und ein Niederdruckturbinenabschnitt sind, und der zweite Verdichter- (152) und der zweite Turbinenabschnitt (154) ein Hochdruckverdichter- und ein Hochdruckturbinenabschnitt sind.

7. Gasturbinentriebwerk nach Anspruch 1, wobei der zweite Getriebezug (74) zwischen der ersten Welle (140) und dem ersten Getriebezug (160) angeordnet ist.

**8.** Gasturbinentriebwerk nach Anspruch 7, wobei die Planetenräder (164) von einem Träger (162) gelagert werden, wobei der Träger (162) konfiguriert ist, um Drehantriebsleistung von dem zweiten Getriebezug (74) aufzunehmen.

**Revendications**

**1.** Moteur à turbine à gaz (120) comprenant :

des premier et second arbres (140, 150) pouvant tourner autour d'un axe commun (A) ;
un ventilateur (142) ; et
des premier et second trains d'engrenages (160, 74) reliés entre eux, les premier et second trains d'engrenages (160, 74) couplant ensemble le premier arbre (140) au ventilateur (142),
dans lequel le premier train d'engrenages (160) est un train d'engrenages épicycloïdal,
dans lequel le second train d'engrenages (74) est conçu pour fournir une réduction de vitesse et **caractérisé en ce que** le train d'engrenages épicycloïdal (160) est un train d'engrenages différentiel qui comprend un engrenage solaire (166), des engrenages planétaires (164) agencés autour de l'engrenage solaire (166) et l'engrenant, et une couronne (170) entourant les engrenages planétaires (164) et les engrenant dans lequel le moteur à turbine à gaz (120) comprend une première section de turbine (146) soutenue sur le premier arbre (140), le second compresseur (152) et les sections de turbine (154) soutenus sur le second arbre (150), et une première section de compresseur (144) couplée au train d'engrenages (160).

**2.** Moteur à turbine à gaz selon la revendication 1, dans lequel le premier train d'engrenages (160) est agencé entre le premier arbre (140) et le second train d'engrenages (74).

**3.** Moteur à turbine à gaz selon la revendication 2, dans lequel les engrenages planétaires (164) sont soutenus par un support (162), le support (162) étant conçu pour recevoir une entrée rotative provenant du premier arbre (140).

**4.** Moteur à turbine à gaz selon la revendication 3, dans lequel le second train d'engrenages (74) est conçu pour recevoir une entrée rotative provenant de l'engrenage solaire (166).

**5.** Moteur à turbine à gaz selon une quelconque revendication précédente, comprenant un aubage d'alimentation (76) couplé au second train d'engrenages (74).

**6.** Moteur à turbine à gaz selon une quelconque revendication précédente, dans lequel les premier et second arbres (140, 150) fournissent respectivement des corps bas et haut, et les premier compresseur (144) et section de turbine (146) sont des compresseur et sections de turbine basse pression, et les second compresseur (152) et sections de turbine (154) sont des compresseur et sections de turbine haute pression.

**7.** Moteur à turbine à gaz selon la revendication 1, dans lequel le second train d'engrenages (74) est agencé entre le premier arbre (140) et le premier train d'engrenages (160).

**8.** Moteur à turbine à gaz selon la revendication 7, dans lequel les engrenages planétaires (164) sont soutenus par un support (162), le support (162) est conçu pour recevoir une entrée rotative provenant du second train d'engrenages (74).

FIG.1

FAN: "−"

LPT: "−"

LPC: "−"

HPC: "+"

HPT: "+"

FIG.2

LPT: "_"
146
159
HPT: "+"
154
120
136
HPC: "+"
152
150
A: LPC:"_"
B: LPC:"+"
144
148
A: FAN:"_"
B: FAN:"+"
142
164
168
74
170
172
166
162
160
140
136

FIG.3

FIG.4

FAN:"-/+"

LPC: "-"

HPC: "+"

HPT: "+"

LPT: "-"

342

320

344

352

354

346

336

359

372

370

364

368

362

374

360

366

348

A

350

340

336

FIG.5

EP 2 834 504 B2

FIG.6

**FIG.7**

**FIG.8**

FAN:"−/+"

INDUCER:"−"

LPC: "−"

HPC: "+"

HPT: "+"

LPT: "−"

EP 2 834 504 B2

FIG.10

FIG.9A

FIG.9B

FIG.9C

EP 2 834 504 B2

**FIG.11A**

**FIG.11B**

**FIG.11C**

**EP 2 834 504 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008120839 A
- US 2009074565 A
- US 2007084184 A
- US 2008098716 A